# EUROPEAN PATENT APPLICATION

(11) **EP 1 502 722 A1**
(43) Date of publication of application: **02.02.2005**
(21) Application number: 04077154.5
(22) Date of filing: 27.07.2004
(51) Int. Cl.: B29B 9/16, B29B 15/10, B29B 17/00, B05D 1/28, B05C 1/02

(54) **Device for the surface treatment of small-size base elements**

(30) Priority: 30.07.2003 IT MI20031559
(71) Applicant: TEC MAC S.r.L., 20020 Arese (Milano) (IT)
(72) Inventor: Monchiero, Massimo, Arese (MI) (IT)
(74) Representative: Raimondi, Margherita

(57) **Abstract**

Device for wetting/impregnating small-size elements (1) with a suitable substance (31;131) supplied by corresponding supply means (30;130), comprising at least one cylinder (10) rotating about a longitudinal axis of rotation and a second means (10;110) rotating about at least one axis of rotation parallel to that of the first cylinder (10), the active substance supplied by said supply means being present on the surface of said cylinder (10) and rotating means (10;110), said cylinder (10) and rotating means (10;110) forming an interspace (11;111) through which said elements (1) for wetting/impregnation pass.

## Description

The present invention relates to a device for wetting/impregnating small-size elements with a suitable substance supplied by corresponding supply means.

It is known in various product sectors that there exists the need to recycle production rejects or waste, packaging or other materials of varying origin in order to obtain further low-cost finished products from said recycling.

Examples of such an activity consist for example in the recycling of waste arising from polystyrene packaging, tyres or other material which may be ground down into the form of granules or in any case small-size base elements which may be reprocessed so as to form the new products.

For this purpose, also known from EP 0,872,320 are a method and a plant offering ample possibility for recycling and reuse of materials by means of the preparation of the base elements in the form of granules which can be suitably agglomerated so as to assume, using moulds and/or containers, the final form required for use.

According to the abovementioned prior art it is envisaged that the plant comprises a temporary storage silo with means for conveying the particles of material to be treated, at least one pair of conveyor belts, at least one nozzle for supplying at least one substance to be applied to the particles, and a container for receiving said particles at least for the time necessary for the active substance to react so as to form the agglomerate.

Although performing its function, this conveyor belt plant has, however, large dimensions and is costly to maintain.

The technical problem which is posed therefore is that of providing a device for wetting small-size elements with an active substance, such as an adhesive for example, which provides a solution to the problems of the known art mentioned above.

Within the context of this problem it is furthermore required that this device should have small dimensions, be easy and inexpensive to manufacture and assemble and be able to be applied rapidly to known plants without the need for substantial modifications thereto.

These results are achieved according to the present invention by a device for wetting/impregnating small-size elements with a suitable substance supplied by corresponding supply means, comprising at least one cylinder rotating about a longitudinal axis of rotation and a second means rotating about at least one axis of rotation parallel to that of the first cylinder, the active substance supplied by said supply means being present on the surface of said cylinder and rotating means, said cylinder and rotating means forming an interspace through which said elements for wetting/impregnation pass.

Further details may be obtained from the following description of a non-limiting example of embodiment forming the subject of the present invention and provided with reference to the accompanying drawings in which:
- Figure 1 shows a schematic cross-section along a vertical plane of a first embodiment of the device according to the present invention;
- Figure 2 shows an enlarged view of a detail according to Figure 1; and
- Figure 3 shows a schematic cross-section, similar to that of Figure 1, of a second embodiment of the device according to the present invention.

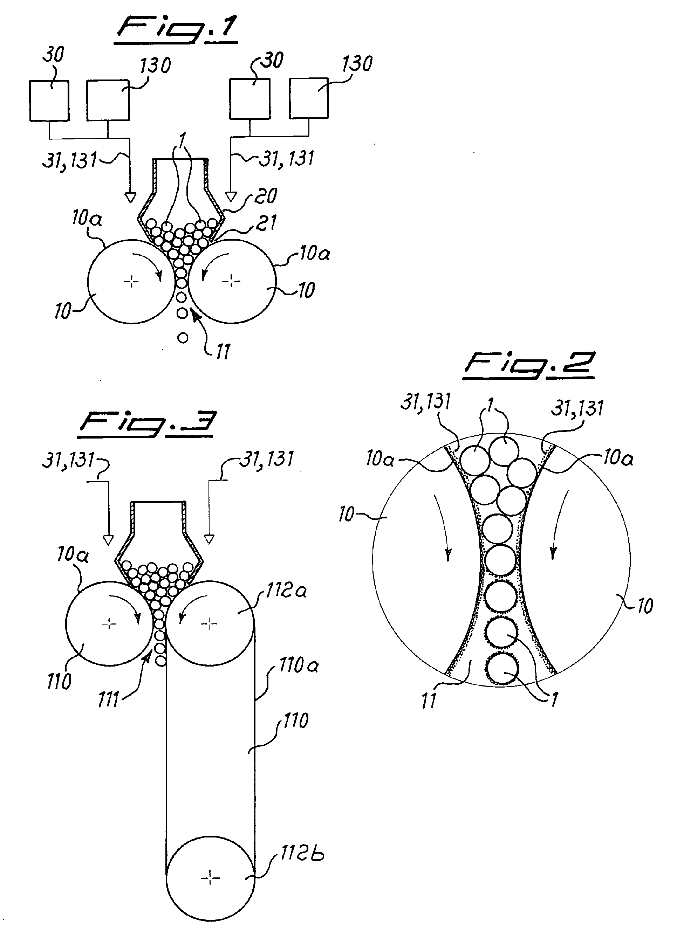

As illustrated in Fig. 1, the device according to the present invention is substantially formed by a pair of cylinders 10 arranged along longitudinal axes of rotation parallel to each other, which cylinders 10 rotate at a different speed.

In the examples shown the cylinders rotate in opposite directions; it is envisaged, however, that the cylinders may also rotate in the same direction.

A hopper 20 is arranged above the pair of cylinders 10, said hopper having a delivery mouth 21 which is arranged substantially aligned with the'interspace 11 formed by the side surface 10a of the two paired cylinders; the hopper contains the small-size elements 1, for example in granular form.

Above each cylinder 10 there is also at least one supply means 30,130 for supplying a suitable substance 31, 131 which, upon leaving the supply device 30,130, is deposited on the surface 10a of the respective cylinder, being conveyed by it.

The operating principle of the device is as follows:
- a suitable quantity of granules 1 is arranged inside the hopper 20;
- the supply devices 30,130 are filled with a suitable substance 31,131 suitable for the final use envisaged for the granules 1;
- the speeds and the direction of rotation of the two cylinders 10 are programmed so that at least the former are different from each other;
- supplying of the substance 31,131 to the cylinders is activated and rotation of the latter is started;
- the granules 1 are supplied to the pair of cylinders 10, rotation of which produces:

- conveying of the substance 31,131 towards the interspace 11; and
- rotation of the said granules 1;
- which granules, passing through the interspace 11 (Fig. 2), are wetted/impregnated with the binding substance 31,131, thus being ready for final use.

According to preferred embodiments of the device it is envisaged that:
- the side surface 10a of the cylinder may be suitably treated so as to increase the amount of friction with the granules 1; examples of said treatment consist, for example, in surface knurling, a suitable lining, or similar treatments;
- the substance 31 supplied to at least one of the two cylinders 10 may be of the reactive type, such as for example a prepolymer or an isocyanate;
and correspondingly the reagent 131, for example consisting of water, to which a suitable catalyst is added, is supplied where necessary onto the other cylinder 10.

As illustrated in Fig. 3 it is envisaged that the device according to the invention may also be realized in the form of a cylinder 10 and a belt 110 wound around two rollers 112a and 112b, at least one of which is a driving roller; in this configuration the belt 110 will be designed with dimensions such as to cause passage of the granule 1 through the interspace 111 along a section of the belt 110 facing the cylinder so as to obtain the same effect of rotation of the granule 1 and conveying of the binder 31,131 with corresponding wetting of the granule in a manner entirely equivalent to that which can be obtained with the two cylinders 10 already described.

The use of the belt 110 instead of one of the two cylinders 10 facilitates, however, supplying of the adhesive.

It is envisaged, moreover, that supplying of the base elements to be treated may be performed by means of associated conveyor belts or feeder screw devices which are conventional per se and therefore not described in detail nor illustrated.

It is therefore clear how the device according to the invention allows simple and low-cost treatment of particles to be wetted/impregnated with suitable substances, such as, for example, an adhesive, thus providing a solution to the problems of the known art described in the introduction.

## Claims

1. Device for wetting/impregnating small-size elements (1) with a suitable substance (31;131) supplied by corresponding supply means (30;130), **characterized in that** it comprises at least one cylinder (10) rotating about a longitudinal axis of rotation and a second means (10;110) rotating about at least one axis of rotation parallel to that of the first cylinder (10), the active substance supplied by said supply means being present on the surface of said cylinder (10) and rotating means (10;110), said cylinder (10) and rotating means (10;110) forming an interspace (11;111) through which said elements (1) for wetting/impregnation pass.

2. Device according to Claim 1, **characterized in that** said second rotating element is a cylinder (10).

3. Device according to Claim 1, **characterized in that** said second rotating element is a belt (110) wound around a pair of rollers (112a,112b).

4. Device according to Claim 3, **characterized in that** at least one of said pair of rollers (112a,112b) is a driving roller.

5. Device according to Claim 1, **characterized in that** the side surface (10a) of said cylinder (10) is treated so as to increase the coefficient of friction thereof with respect to the elements (1) to be wetted/impregnated.

6. Device according to Claim 5, **characterized in that** said side surface is knurled.

7. Device according to Claim 5, **characterized in that** said side surface is lined with a suitable material.

8. Device according to Claim 1, **characterized in that** the speeds of rotation of said at least one cylinder (10) and the rotating means (10;110) coupled with it are different.

9. Device according to Claim 1, **characterized in that** the direction of rotation of the cylinder (10) and the rotating means (10;110) is the same.

10. Device according to Claim 1, **characterized in that** the direction of rotation of the cylinder (10) and the rotating means (10;110) is different.

11. Device according to Claim 1, **characterized in that** said small-size elements (1) to be treated are in the form of granules.

12. Device according to Claim 1, **characterized in that** said small-size elements to be treated are in the form of chips.

13. Device according to Claim 1, **characterized in that** it comprises means (20) for supplying the elements (1) to be treated.

14. Device according to Claim 13, **characterized in that** said supply means consist of a hopper (20).

15. Device according to Claim 13, **characterized in that** said supply means (20) consist of a conveyor belt.

16. Device according to Claim 13, **characterized in that** said supply means (20) consist of a feeder screw.

17. Device according to Claim 1, **characterized in that** said substance supplied to at least either one of the cylinder (10) and the rotating means (10;110) is an adhesive.

18. Device according to Claim 17, **characterized in that** said adhesive is of the reactive type.

19. Device according to Claim 17, **characterized in that** a reaction component for the adhesive is supplied onto the other of the two rotating elements.

20. Device according to Claim 18, **characterized in that** said substance supplied to the first cylinder (10) is a prepolymer.

21. Device according to Claim 18, **characterized in that** said substance supplied to the first cylinder (10) is an isocyanate.

22. Device according to Claim 19, **characterized in that** said reagent is of the water-based type.

23. Device according to Claim 19, **characterized in that** said reagent is of the water-based type to which a catalyst is added.
